# EUROPEAN PATENT SPECIFICATION

(11) **EP 3 247 165 B1**
(45) Date of publication and mention of the grant of the patent: **30.06.2021**
(21) Application number: 15881510.0
(22) Date of filing: 11.02.2015
(51) Int. Cl.: H04W 74/08, H04W 72/04, H04B 7/0452

(54) **STATION (STA)**
STATION (STA)
STATION (STA)

(43) Date of publication of application: 22.11.2017
(73) Proprietor: Huawei Technologies Co., Ltd., Longgang District Shenzhen, Guangdong 518129 (CN)
(72) Inventor: LI, Bo, Xi'an Shaanxi 710072 (CN); ZUO, Xiaoya, Xi'an Shaanxi 710072 (CN); KONG, Xueli, Shenzhen Guangdong 518129 (CN)
(74) Representative: Epping - Hermann - Fischer
(86) International application number: PCT/CN2015/072815
(87) International publication number: WO 2016/127348

(56) References cited:
- CN-A- 104 125 046
- CN-A- 104 254 136
- US-A1- 2009 010 275
- US-A1- 2012 230 317
- US-A1- 2013 223 382
- US-A1- 2013 229 996
- US-A1- 2013 286 959
- US-A1- 2014 269 544
- US-A1- 2014 328 191
- LOU HANQING ET AL: "Multi-user Parallel Channel Access for high efficiency carrier grade wireless LANs", 2014 IEEE INTERNATIONAL CONFERENCE ON COMMUNICATIONS (ICC), IEEE, 10 June 2014 (2014-06-10), pages 3868-3870, XP032632036, DOI: 10.1109/ICC.2014.6883924 [retrieved on 2014-08-26]
- None

## Description

### TECHNICAL FIELD

The present invention relates to the communications technologies, and in particular, a station STA.

### BACKGROUND

In 802.11 specifications, one access point (AP for short) and multiple stations (English: Station, STA for short) associated with the AP constitute a basic service set (BSS for short).

In a BSS, an uplink multiuser data transmission method is: On a single channel or multiple channels, after an AP sends a trigger frame, after a time of SIFS (Short Interframe Space), if the channel is idle, a STA randomly selects a sub-channel to send a request to send (RTS for short) to contend for access. After the RTS is received, after a time of short interframe space (SIFS for short), the AP sends a clear to send (CTS for short) message to the STA on a whole channel, to schedule the STA to transmit data on a specific sub-channel. After the AP sends the CTS, after a time of SIFS, the STA sends uplink data on an allocated sub-channel, and then after a time of SIFS, the AP replies with an acknowledgement message on the whole channel. However, the uplink multiuser data transmission method has the following disadvantages: 1) Because before a Trigger frame is used to schedule multiple users, an AP does not know which users have uplink data, a problem of "triggering without response" exists; 2) when a STA performs uplink data transmission, multiple STAs distributed relatively broadly in geographic positions may perform access in parallel, causing a problem of interference diffusion; 3) an effect of "proximity" exists, and relatively complex power control may be needed.

Another uplink multiuser data transmission method is: On a single channel or multiple channels, all STAs listen to channels and back off independently, and after backing off, randomly select sub-channels to send RTSs to contend for channel access. After an AP receives the RTS, after a time of SIFS, the AP sends CTSs to the STAs on a whole channel, to schedule the STAs to transmit data on specific sub-channels. After the AP sends the CTSs, after a time of SIFS, the STAs send data on allocated sub-channels, and then after a time of SIFS, the AP replies with an acknowledgement message on a whole channel. However, the uplink multiuser data transmission method can hardly resolve a problem of RTS sending synchronization between STAs, causing a problem of mutual interference between multiple channels and reducing the uplink access efficiency.

US 2013/229996 A1 discloses a method and apparatus providing multi-user parallel channel access (MU-PCA) and/or single-user parallel channel access (SU-PCA) using transmit and/or receive with symmetrical bandwidth, in the downlink (DL), uplink (UL), or combined DL and UL. SU-PCA and MU-PCA support unequal modulation and coding schemes (MCS) and unequal transmit power.

US 2013/286959 A1 discloses an apparatus to be configured to support coordinated orthogonal block-based resource allocation (COBRA) operations. An access point (AP) may be configured to indicate to a plurality of stations (STA)s that it may support COBRA. Each WTRU may be configured to indicate to the AP that it can support COBRA as well. The AP may be configured to transmit a COBRA controller information element (IE) comprising a plurality of fields to each of the WTRUs.

Lou Hanqing et al: "Multi-user Parallel Channel Access for high efficiency carrier grade wireless LANs", 2014 IEEE INTERNATIONAL CONFERENCE ON COMMUNICATIONS (ICC), IEEE, 10 June 2014 (2014-06-10), pages 3868-3870, XP032632036, discloses Multi-user Parallel Channel Access whereAP polls intended STAs first, and then allocates sub-channels for them. When receiving a MU/PCA Poll from AP, intended STAs transmit an uplink request frame (ULR), which indicates information on buffered uplink packets, such as size, QoS requirements, etc. After receiving ULR frames from intended STAs, AP transmits schedule frames, MU/PCA Schedule, to both STAs. According to the schedule frame, the intended STAs transmit the uplink traffic on the corresponding sub-channel(s).

### SUMMARY

The present invention provides a station STA, where the STA is in a BSS, comprising an access point, AP, and multiple stations, to resolve problems of triggering without response and interference diffusion in the prior art.

The invention is defined by the independent claim 1. Advantageous embodiment of the invention is given in the sub-claim 2.

The present invention provides a station, wherein the station is in a BSS comprising an access point, AP, and multiple stations and the station comprises:
a sending unit configured:
when the station obtains, by means of listening, a second request to send sent by another station acting as a master station, and the station satisfies the following conditions: the station has buffer data to be transmitted; the station is in a same basic service set, BSS, as the other station sending the second request to send, and a power of a signal received from the other station sending the second request to send and obtaining at least one channel by means of contention is greater than a preset threshold, to send a third request to send to the AP,
and a receiving unit, configured to receive response information sent by the AP, wherein the response information is used to schedule the station to transmit data on a specified sub-channel;
wherein a master station is a station which after obtaining at least one channel by means of contention sends the second request to send and wherein the second request to send comprises buffer data information and information about a BSS to which the master station sending the second request to send belongs, wherein the BSS information is used to identify, by the station, whether the station is in the same BSS as the master station sending the second request to send, wherein the BSS information is used to identify, by the AP, whether the AP is in the same BSS as the station sending the third request to send and wherein the buffer data information of the second request to send comprises a length and a type of data needing to be sent by the master station sending the second request to send and wherein the buffer data information of the third request to send comprises a length and a type of data needing to be sent by the station sending the third request to send.

### BRIEF DESCRIPTION OF DRAWINGS

To describe the technical solutions in the embodiments of the present invention more clearly, the following briefly describes the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a schematic diagram of an application scenario of the present invention;
FIG. 2 is a signaling diagram of Example 1 of a data transmission method according to the present invention;
FIG. 3 is a flowchart in which a surrounding station determines whether to follow a station, obtaining a channel by means of contention, to send a request to send according to an embodiment of the present invention;
FIG. 4 is a structural diagram of an RTX frame according to Example 1 of the present invention;
FIG. 5 is a structural diagram of a CTX frame according to Example 1 of the present invention;
FIG. 6 is a signaling diagram of Example 2 of a data transmission method according to the present invention;
FIG. 7 is a structural diagram of an RTX frame according to Example 2 of the present invention;
FIG. 8 is a signaling diagram of Example 3 of a data transmission method according to the present invention;
FIG. 9 is a structural diagram of an RTX frame according to Example 3 of the present invention;
FIG. 10 is a signaling diagram of Example 4 of a data transmission method according to the present invention;
FIG. 11 is a structural diagram of an RTXA frame according to Example 4 of the present invention;
FIG. 12 is a structural diagram of an RTXB frame according to Example 4 of the present invention;
FIG. 13 is a signaling diagram of Example 5 of a data transmission method according to the present invention;
FIG. 14 is a structural diagram of an RTX-01 frame according to Example 5 of the present invention;
FIG. 15 is a structural diagram of an RTX-02 frame according to Example 5 of the present invention;
FIG. 16 is a flowchart of a data transmission method according to Embodiment 6 of the present invention;
FIG. 17 is a composition diagram of a communications system according to Embodiment 6 of the present invention;
FIG. 18 is a flowchart of a data transmission method according to Example 7 of the present invention;
FIG. 19 is a composition diagram of modules of a station according to Example 7 of the present invention;
FIG. 20 is a flowchart of a data transmission method according to Example 8 of the present invention;
FIG. 21 is a composition diagram of modules of an access point according to Example 8 of the present invention;
FIG. 22 is a schematic structural diagram of a station according to an embodiment of the present invention; and
FIG. 23 is a schematic structural diagram of an access point according to an embodiment of the present invention.

### DESCRIPTION OF EMBODIMENTS

The following clearly and completely describes the technical solutions in the embodiments of the present invention with reference to the accompanying drawings in the embodiments of the present invention.

Technical solutions of the present invention may be applied to an orthogonal frequency division multiplexing (OFDM) system, such as a wireless local area network (WLAN) system, especially wireless fidelity (WiFi). Certainly, the method in embodiments of the present invention may be applied to an OFDM system of another type, and this is not limited herein in the embodiments of the present invention.

To facilitate understanding of the embodiments of the present invention, first, several elements to be introduced in description of the embodiments of the present invention are described herein.

An access point (AP) is a wireless switch used in a wireless network and is also a core of the wireless network. A wireless AP is an access point for a mobile computer user to enter a wired network and is mainly used in a broadband family, inside buildings, and inside parks, a typical coverage distance is tens to hundreds of meters, and a current main technology is 802.11 series. An AP is equivalent to a bridge that connects a wired network and a wireless network, and a main function thereof is: connecting wireless network clients together and then connecting a wireless network to the Ethernet.

A station (STA) is any wireless terminal device, such as a computer onto which a wireless network interface card is installed or a smartphone with a WiFi module.

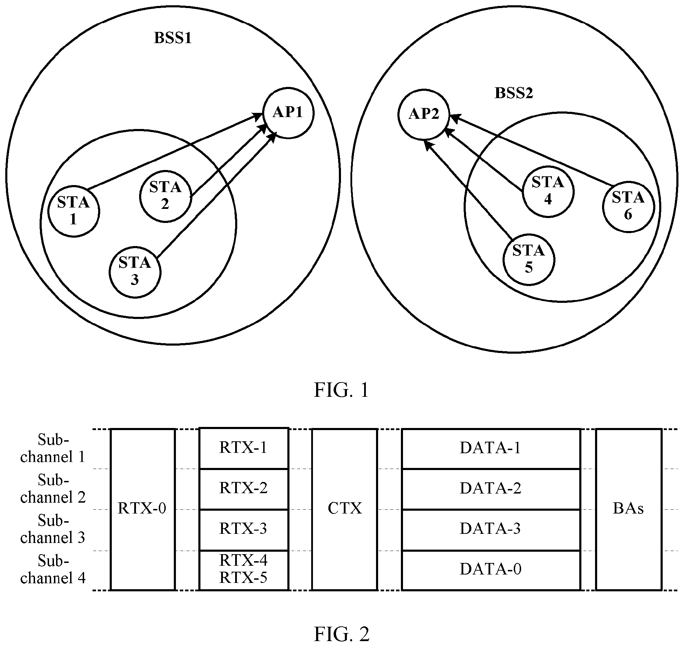

Referring to FIG. 1, the present invention provides a multiuser parallel access scheme initiated by a station STA. In a basic service set 1 (BSS1), after a STA 1 successfully obtains channel resources by means of contention, surrounding stations STA 2 and STA 3 that are close to the STA 1 in geographic positions and that have service transmission demands are triggered to access a channel in parallel. In a basic service set 2 (BSS2), after a STA 4 successfully obtains channel resources by means of contention, surrounding stations STA 5 and STA 6 that are close to the STA 4 in geographic positions and that have service transmission demands are triggered to access a channel in parallel. Parallel access may use an OFDMA (Orthogonal Frequency Division Multiple Access, orthogonal frequency division multiple access) technology or may use a UL MU-MIMO (Uplink Multi User Multiple-Input Multiple-Output, uplink multi user multiple-input multiple-output) technology. Because a distance between surrounding STAs is short, there is a slight difference between delays generated when signals are broadcast to an AP side. Therefore, the solutions can satisfy a requirement for request to send (RTX) sending synchronization between STAs. STAs in a same basic service set are within a particular geographic range, so that an interference range can be reduced. Therefore, an interference range can be effectively controlled.

An RTX sent by a station in the present invention includes at least: one or more of the following information: a length of buffer data, available bandwidth indication, an optional service type, a delay requirement, or the like.

To adapt to a requirement of 802.11ax for a channel bandwidth, a bandwidth of a single channel in the present invention may be 20 MHz, 40 MHz, 80 MHz, 160 MHZ (80+80 MHZ), or the like.

In the following, embodiments and examples not falling within the scope of the appended claims are to be understood as examples useful for understanding the invention. Therefore, **Examles 1-5** described below are not according to the invention and are present for illustration purposes only.

### Example 1

This embodiment is described by using an example in which a STA obtains a channel by means of contention and instructs a surrounding STA to randomly contend for access. In a case of a single channel, the single channel may be divided into multiple sub-channels. The sub-channels herein refer to dividing a channel into multiple parts in a frequency domain, and each part is referred to as a sub-channel.

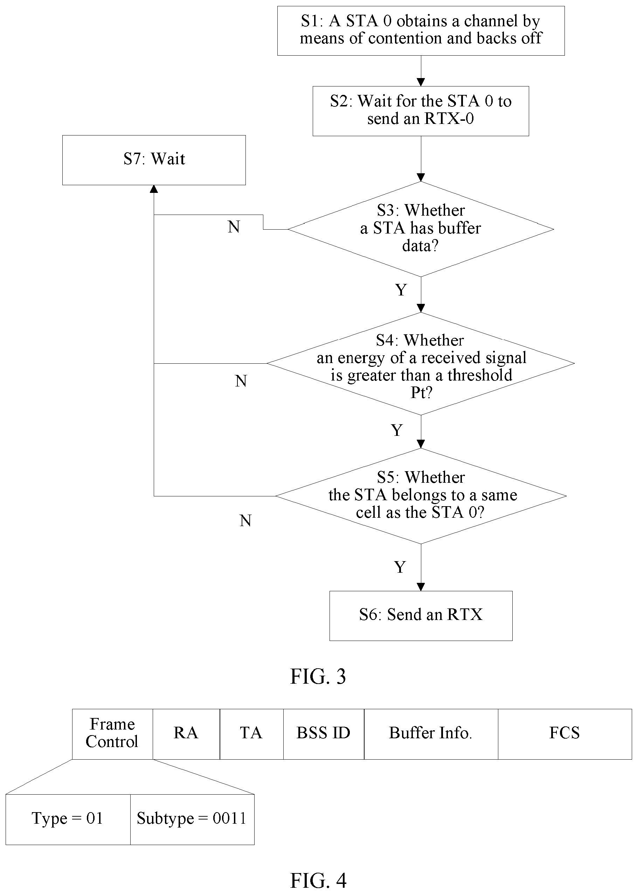

Referring to FIG. 2 and FIG. 3, FIG. 2 is a schematic diagram of sent signaling in Example 1. In Example 1, a STA 0 obtaining one channel by means of contention backs off and sends an RTX-0 frame on the channel. The RTX-0 frame is received by an AP in a local cell and another STA that can be obtained by means of listening. After receiving the RTX-0, a STA around the STA 0 first determines whether the STA has buffer data needing to be sent to the AP, then determines whether an energy of a signal received from the STA 0 is greater than a preset power threshold Pt, and then determines whether a sending node of the RTX-0 is in a same BSS as the STA. If the foregoing three following conditions are all satisfied, the STA sends a request to send RTX after a period of a waiting time, to follow the STA 0 to perform uplink access. The AP performs resource scheduling after receiving requests to send sent by the STA 0 and a follower station of the STA 0, and sends response information CTX, to schedule the STA 0 and the follower station of the STA 0 to transmit data on specified sub-channels.

In the embodiment shown in FIG. 2, stations following the master station STA 0 to send requests to send include a STA 1 to a STA 5. The STA 1 to the STA 5 send requests to send RTX 1 to RTX 5 on sub-channels obtained by means of contention. Because the STA 4 and the STA 5 collide on a same sub-channel, and the requests to send RTX 4 and RTX 5 sent by the STA 4 and the STA 5 cannot be normally decoded by the AP, the AP only sends response information CTX to the STA 0 and the STA 1 to the STA 3, to specify the STA 1 to the STA 3 to respectively transmit data DATA-1 to DATA-3 on sub-channels 1 to 3 and specify the STA 0 to transmit data DATA-0 on a sub-channel 4.

The waiting time may be any one of short interframe space (SIFS), point coordination interframe space (point coordination IFS, PIFS), distributed coordination interframe space (Distributed Coordination IFS, DIFS), or arbitration interframe space (Arbitration IFS, AIFS). The STAs 1 to 5 each may randomly select a sub-channel to transmit an RTX thereof.

The RTX mentioned in the present invention is a request to send sent by the station STA to the access point AP, the CTX is response information sent by the access point AP to the station STA, and the CTX may be used to represent that a request to send of the STA is permitted or may be used to specify stations STAs to transmit data on corresponding sub-channels.

In a specific embodiment, a specific process of determining, by a surrounding STA, whether to follow the STA 0 to send an RTX is shown in FIG. 3:
S1: The STA 0 obtains a channel by means of contention and backs off.
S2: The STA 0 sends an RTX-0.
S3: Determine whether a surrounding STA has buffer data needing to be transmitted; if yes, perform step S4; and otherwise, perform S7 and temporarily skip following the STA 0 to perform uplink access to the channel.
S4: Determine whether a signal received by the surrounding STA from the STA 0 is greater than a preset power threshold Pt; if the signal received by the STA from the STA 0 is greater than the preset power threshold Pt, perform step S5; and otherwise, perform S7 and temporarily skip following the STA 0 to perform uplink access to the channel.
S5: Determine whether the surrounding STA and the STA 0 belong to a same BSS; if yes, perform step S6; and otherwise, perform S7 and temporarily skip following the STA 0 to perform uplink access to the channel.
S6: If three conditions mentioned in steps S3 to S5 are all satisfied, the surrounding STA satisfying the conditions send an RTX and follows the STA 0 to access the channel in parallel. S7: If any one of three conditions mentioned in steps S3 to S5 is not satisfied, the surrounding STA not satisfying the conditions enters a waiting state and temporarily does not follow the STA 0 to access the channel.

After the RTX-0 sent by the STA 0 that is the first to obtain the channel by means of contention is obtained by means of listening by the surrounding station, only a station needing to transmit buffer data in the surrounding stations follows the STA 0 to access the channel. In this way, it may be avoided that a station having no data transmission requirement occupies a channel, and a problem of "triggering without response" is avoided. Only a station in the same BSS as the STA 0 in the surrounding stations follows the STA 0 to access the channel, so that interference diffusion can be avoided and an interference range can be reduced. Only a station whose signal received from the STA 0 is greater than the preset power threshold Pt in the surrounding stations follows the STA 0 to access the channel, so that a station following the STA 0 to perform access can be controlled within a certain range and quality of a communications signal can be ensured. In another specific embodiment of the present invention, a station following the STA 0 to access the channel needs to satisfy only at least one of the foregoing three conditions.

A frame structure of the RTX-0 sent by the STA 0 is shown in FIG. 4, and the RTX-0 includes the following fields: Frame Control (frame control), RA (Receiver Address, receiver address), TA (Transmission Address, transmitter address), BSS ID (Basic Service Set Identifier, basic service set identifier), Buffer Info. (Buffer Information, buffer information), and FCS (Frame Check Sequence, frame check sequence). A type of the Frame Control is: Type = 01, and Subtype = 0011. The BSS ID indicates an ID of a BSS of a STA initiating multiuser parallel access, and is used to determine, by a surrounding STA, whether the STA is in a same BSS as the initiating STA. The Buffer info. includes information such as a length and a type of data needing to be sent by a STA node.

The RTX mentioned in this embodiment uses a fixed frame format, and a quantity of bits occupied by the RTX 1 to an RTX N may have a fixed length or a variable length. If the RTX has a variable length, a problem of aligning the RTX 1 to the RTX N needs to be considered. Non-alignment may result in that a node that first completes transmitting the RTX losses a sub-channel of the node, and the sub-channel is occupied by another node by means of contention. For a problem of non-alignment between lengths of the RTXs, there are three possible solutions: First, select a fixed RTX length and MCS modulation and coding scheme; second, stipulate a maximum length of an RTX, and a station having a RTS whose length is less than the maximum length enables the RTS to reach the maximum length in a manner of bit stuffing; and third, stipulate a maximum length of an RTX, and each station selects, according to the length, a modulation and coding scheme MCS that can enable the station to reliably transmit data.

When there is a large quantity of STAs having uplink buffer data, and there is a relatively small amount of available channel or sub-channel data, if all STAs access the channels or sub-channels, serious collision is generated.

Referring to FIG. 2, after the STA 0 sends the RTX 0, possible behaviors of a surrounding station are divided into three cases:
Case 1: When a STA sends an RTX, collision does not occur.
   After a time of SIFS (Short Interframe Space, short interframe space), the STAs 1 to 3 separately receive CTXs, and then the STAs 0 to 3 send corresponding data frames DATA 0 to 3 on allocated sub-channels. The CTXs sent by the AP may specify the stations to transmit data on the specified sub-channels.
   After data is completely sent, the STAs 0 to 4 wait for respective acknowledgement messages, such as ACK (Acknowledgement, acknowledgement character) or BAS (Block acknowledgements, block acknowledgements) messages fed back by the AP.
Case 2: When two or more STAs (such as the STAs 4 and 5 in FIG. 2) select a same sub-channel to send RTXs, collision occurs.
   The requests to send RTX 4 and RTX 5 sent by the STA 4 and the STA 5 cannot be normally decoded by the AP, the AP does not allocate sub-channels to the STA 4 and the STA 5, and stations that collide on a same sub-channel cannot normally transmit data.
Case 3: If another STA around the STA 0 has no service for sending, after a time of waiting for the RTX 1 to the RTX N expires, the AP sends indication information to the STA 0, so that the STA 0 occupies a channel. The RTX sent by the STA 0 is a complete MAC frame and includes duration duration, and a case in which the channel is taken by another node may be avoided by using an NAV ((Network Allocation Vector, network allocation vector).

The AP sends, according to a status of receiving the RTX sent by the surrounding STA of the STA 0, the CTX to the STA, to schedule the STA to transmit data on a specified sub-channel. Using FIG. 2 as an example, the AP may send, on a whole channel, the CTX to the STAs 0 to 3 sending requests to send, or may respectively send the CTXs 1 to 3 on sub-channels 1 to 3 on which the RTXs 1 to 3 are transmitted. In the two manners of sending the CTX, the STAs 0 to 3 may be scheduled to send respective DATA 0 to 3 on specified sub-channels.

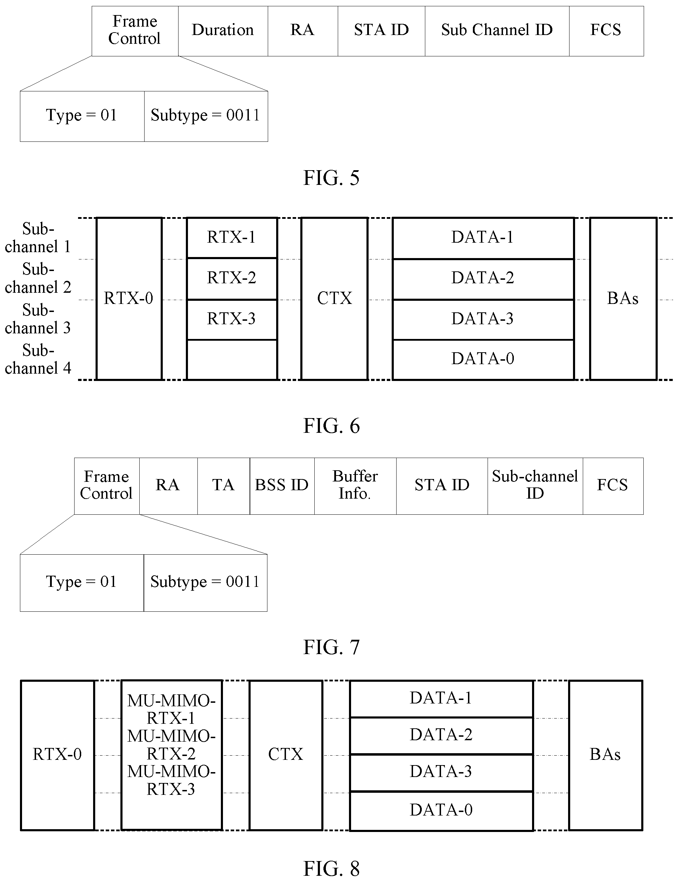

A frame structure of the CTX is shown in FIG. 5 and the CTX includes the following fields: Frame Control (frame control), Duration (duration), RA (Receiver Address, receiver address), STA ID (station identifier), Sub Channel ID (sub-channel identifier), and FCS (Frame Check Sequence, frame check sequence). A type of the Frame Control is: Type = 01, and Subtype = 0011. A STA specified by the STA ID accesses a sub-channel. The Sub-channel ID specifies a number of the sub-channel that the STA accesses. The STA number is in one-to-one correspondence with the sub-channel number. For example, the STA ID is 1, and the STA 1 is specified to access a channel. A number of the Sub Channel ID is 1, and the corresponding STA 1 is specified to access a sub-channel 1.

Example 1 describes only a case in which there are six STAs and four available sub-channels. In actual situations, there may be more STAs and available sub-channels. A specific implementation process is similar to the solution described in Example 1.

The AP may send the CTX by using multiple scheduling algorithms, which may be selected according to actual needs. For example, the STA 1 transmits the RTX-1 on the sub-channel 1, and the CTX also specifies the STA 1 to access the sub-channel 1, to schedule the STA 1 to transmit data on the sub-channel 1.

### Example 2

When there is a large quantity of STAs having uplink data buffer, and there is a relatively small quantity of available sub-channels, if all surrounding STAs perform random access according to the manner in Example 1, serious collision may be generated. Example 2 is described by using an example in which after obtaining a channel by means of contention, a STA instructs a surrounding STA to access a specified sub-channel. In this case, the STA specifies a sub-channel that the surrounding STA accesses, so that collision can be reduced. In a case of a single channel, the single channel may be divided into multiple sub-channels. The sub-channels herein refer to dividing a channel into multiple parts in a frequency domain, and each part is referred to as a sub-channel.

In a schematic signaling diagram shown in FIG. 6, after backing off, a STA 0 obtaining one channel by means of contention sends an RTX-0 frame on the channel. After receiving the RTX-0, a STA around the STA 0 first determines whether the STA has buffer data needing to be sent to an AP, then determines and detects whether an energy of a signal received from the STA 0 is greater than a preset power threshold Pt, and then determines whether a sending node of the RTX-0 is in a same BSS as the STA. If the foregoing three conditions are all satisfied, at least one time length is waited for. The time length includes any one or a combination of SIFS, PIFS, DIFS, or AIFS, and STAs 1 to 3 respectively transmit respective RTXs on sub-channels specified in the RTX-0.

A structure of the RTX-0 frame sent by the STA 0 is shown in FIG. 7, and the RTX-0 frame includes the following fields: Frame Control (frame control), RA (Receiver Address, receiver address), TA (Transmission Address, transmitter address), BSS ID (Basic Service Set Identifier, basic service set identifier), Buffer Info. (Buffer Information, buffer information), STA ID (an identifier of a surrounding station), Sub Channel ID (sub-channel identifier), and FCS (Frame Check Sequence, frame check sequence).

A type of the Frame Control is: Type = 01, and Subtype = 0011. The BSS ID indicates an ID of a BSS of the STA 0, and is used to determine, by a surrounding STA, whether the surrounding STA is in the same BSS as the STA 0. The Buffer info. includes information such as a length and a type of data needing to be sent by the STA 0. A surrounding STA specified by the STA ID accesses a sub-channel. The Sub-channel ID specifies a number of the sub-channel that the surrounding STA accesses. The STAID is in one-to-one correspondence with the Sub-channel ID. For example, STA IDs are 1 to 3, and the STAs 1 to 3 are specified to access sub-channels. Numbers of the Sub Channel IDs are 1 to 3, and the STAs 1 to 3 are respectively specified to access sub-channels 1 to 3.

The STA 0 may specify, according to historical information, which surrounding STA accesses which sub-channel. The STA 0 may acquire information about the surrounding STA, such as an ID, a service, and an address, by listening to a MAC header transmitted by the surrounding STA. In summary, the STA 0 may acquire the information about the STA around the STA 0, so that the STA 0 can schedule the surrounding STA to access a specified sub-channel.

The AP sends, according to a status of receiving the RTX sent by the surrounding STA, a CTX to the STA sending the request to send, to schedule the STA to transmit data on a specified sub-channel. Using FIG. 7 as an example, the AP may send, on a whole channel, CTXs to the STAs 0 to 3 sending requests to send. The AP may respectively send CTXs 1 to 3 on the sub-channels 1 to 3 on which the RTXs 1 to 3 are transmitted. In the two manners of sending the CTX, the STAs 0 to 3 may be scheduled to send respective DATA 0 to 3 on specified sub-channels.

Example 2 describes only a case in which there are four STAs and four available sub-channels. In actual situations, there may be more STAs and available sub-channels. A specific implementation process is similar to the solution described in Example 2.

The AP may send the CTX by using multiple scheduling algorithms, which may be selected according to actual needs. For example, the STA 1 transmits the RTX-1 on the sub-channel 1, and the CTX also specifies the STA 1 to access the sub-channel 1, to schedule the STA 1 to transmit data on the sub-channel 1.

### Example 3

This embodiment is described by using an example in which a STA obtains a channel by means of contention and instructs a surrounding STA to access a specified sub-channel in a manner of UL MU-MIMO. In a case of a single channel, the single channel may be divided into multiple sub-channels. The sub-channels herein refer to dividing a channel into multiple parts in a frequency domain, and each part is referred to as a sub-channel.

As shown in FIG. 8, after backing off, a STA 0 obtaining one channel by means of contention sends an RTX-0 frame on the channel. After receiving the RTX-0, a STA around the STA 0 first determines whether the STA has buffer data needing to be sent to an AP, then determines and detects whether an energy of a signal received from the STA 0 is greater than a preset power threshold Pt, and then determines whether a sending node of the RTX-0 is in a same BSS as the STA. If the foregoing three conditions are all satisfied, after at least one time length is waited for, surrounding stations STAs 1 to 3 are specified to send of RTX frames 1 to 3 in a manner of UL MU-MIMO (Uplink Multi User Multiple-Input Multiple-Output, uplink multi user multiple-input multiple-output), where the time length includes any one or a combination of SIFS, PIFS, DIFS, or AIFS.

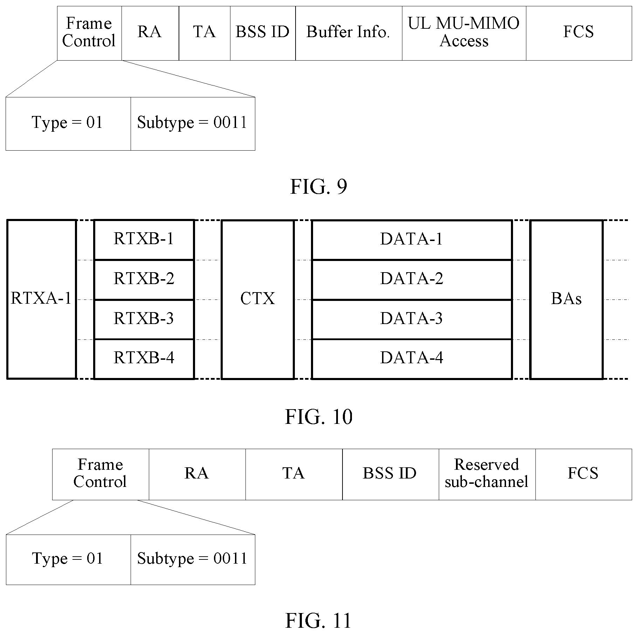

A structure of the RTX-0 frame sent by the STA 0 is shown in FIG. 9, and the RTX-0 frame includes the following fields: Frame Control (frame control), RA (Receiver Address, receiver address), TA (Transmission Address, transmitter address), BSS ID (Basic Service Set Identifier, basic service set identifier), Buffer Info. (Buffer Information, buffer information), UL MU-MIMO Access (uplink multi user multiple-input multiple-output access), and FCS (Frame Check Sequence, frame check sequence). A type of the Frame Control is: Type = 01, and Subtype = 0011. The BSS ID indicates an ID of the BSS of the STA 0, and is used to determine, by a surrounding STA, whether the surrounding STA is in the same BSS as the STA 0. The Buffer info. includes information such as a length and a type of data needing to be sent by the STA 0. The UL MU-MIMO Access specifies the surrounding station to perform access in a manner of UL MU-MIMO. This embodiment is proposed under the premise that the access point and the station support the MU-MIMO technology.

The AP sends, according to a status of receiving the RTX sent by the surrounding STA, a CTX to the STA, to schedule the STA to transmit data on a specified sub-channel. The sub-channel herein refers to dividing a channel into multiple parts in a frequency domain, and each part is referred to as a sub-channel.

Using FIG. 8 as an example, the AP may send, on a whole channel, CTXs to the STAs 0 to 3 sending requests to send, or may respectively send CTXs 1 to 3 on sub-channels 1 to 3 on which the RTXs 1 to 3 are transmitted. In the two manners of sending the CTX, the STAs 0 to 3 may be scheduled to send respective DATA 0 to 3 on specified sub-channels.

Example 3 describes only a case in which there are four STAs and four available sub-channels. In actual situations, there may be more STAs and available sub-channels. A specific implementation process is similar to the solution described in Example 3. The STA 0 may send the CTX by using multiple scheduling algorithms, which may be selected according to actual needs. Scheduling information is transmitted by using the CTX, and the CTX includes application of an appropriate scheduling algorithm and can complete a scheduling task.

### Example 4

The embodiment described in this section is described by using an example in which a STA obtains one channel by means of contention, instructs a surrounding STA to perform random access contention, and reserves a sub-channel for the STA. In a case of a single channel, the single channel may be divided into multiple sub-channels. The sub-channels herein refer to dividing a channel into multiple parts in a frequency domain, and each part is referred to as a sub-channel.

After backing off, a STA 1 obtaining one channel by means of contention sends an RTX A-1 on a whole channel. The RTX A-1 includes a station identifier of the STA 1 and a number of an accessed and reserved sub-channel. After at least one time length is waited for, the reserved sub-channel is selected for sending an RTX B-1, as shown in FIG. 10, where the time length includes any one or a combination of SIFS, PIFS, DIPS, or AIFS.

After obtaining the RTX A-1 by means of listening, a STA around the STA 1 first determines whether the STA has buffer data needing to be sent to an AP, then determines and detects whether an energy of a signal received from the STA 1 is greater than a preset power threshold Pt, and then determines whether a sending node of the RTX-0 is in a same BSS as the STA. If the foregoing three conditions are all satisfied, after at least one time length is waited for, STAs 2 to 4 send RTXs B2 to B4 on other sub-channels other than the reserved sub-channel, where the time length includes any one or a combination of SIFS, PIFS, DIFS, or AIFS. There is an interval of a time period between sending of the RTX A and subsequent RTX B frames, so that stations sending the subsequent RTX B frames can switch from a listen state to a sending state.

A frame structure of the RTX A-1 sent by the STA 1 is shown in FIG. 11, and the RTX A-1 includes the following fields: Frame Control (frame control), RA (Receiver Address, receiver address), TA (Transmission Address, transmitter address), BSS ID (Basic Service Set Identifier, basic service set identifier), Reserved sub-channel (reserved sub-channel), and FCS (Frame Check Sequence, frame check sequence). A type of the Frame Control is: Type = 01, and Subtype = 0011. The BSS ID indicates an ID of a BSS of a STA initiating multiuser uplink access, and is used to determine, by a surrounding STA, whether the surrounding STA and the initiating STA belong to a same cell. The Reserved sub-channel specifies the surrounding STA to randomly access a sub-channel other than the reserved sub-channel.

The AP sends, according to a status of receiving the RTX sent by the surrounding STA, a CTX to the STA, to schedule the STA to transmit data on a specified sub-channel. FIG. 10 is used as an example, and a scheduling manner is not limited to specific forms in the figure. The AP may send the CTX on a whole channel or may respectively send CTXs 1 to 4 on sub-channels 1 to 4 on which the RTX B-1 to RTX B-4 are transmitted. In the two manners of sending the CTX, the STAs 1 to 4 may be scheduled to send respective DATA 1 to 4 on specified sub-channels.

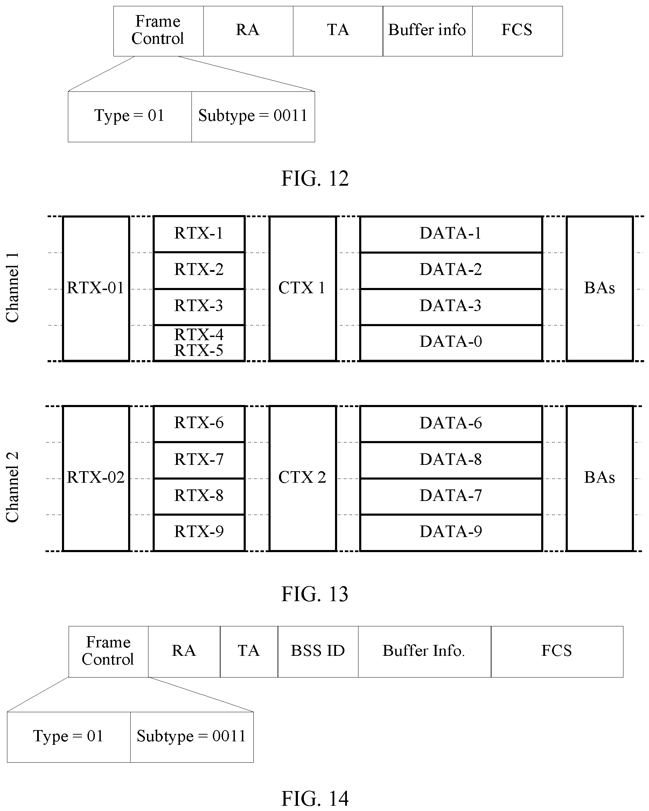

Example 4 describes only a case in which there are four STAs and four available sub-channels. In actual situations, there may be more STAs and available sub-channels. A specific implementation process is similar to a solution described in Example 5. The STA 1 may send the CTX by using multiple scheduling algorithms, which may be selected according to actual needs. A frame structure of the RTX B is shown in FIG. 12, and the RTX B includes the following fields: Frame Control (frame control), RA (Receiver Address, receiver address), TA (Transmission Address, transmitter address), Buffer Info. (Buffer Information, buffer information), and FCS (Frame Check Sequence, frame check sequence). A type of the Frame Control is: Type = 01, and Subtype = 0011. The Buffer info. includes information such as a length and a type of data needing to be sent by a STA node.

### Example 5

This embodiment is described by using an example in which a STA obtains two channels by means of contention, each channel includes four sub-channels, and the STA instructs a surrounding STA to randomly access a sub-channel or to access a specified sub-channel. In a case of a single channel, the single channel may be divided into multiple sub-channels. The sub-channels herein refer to dividing a channel into multiple parts in a frequency domain, and each part is referred to as a sub-channel.

As shown in FIG. 13, after backing off, a STA 0 obtaining two channels by means of contention sends an RTX-0 frame on two channels at the same time. After receiving the RTX-0, a STA around the STA 0 first determines whether the STA has buffer data needing to be sent to an AP, then determines and detects whether an energy of a signal received from the STA 0 is greater than a preset power threshold Pt, and then determines whether a sending node of the RTX-0 is in a same BSS as the STA. If the foregoing three conditions are all satisfied, after at least one time length is waited for, on a channel 1, STAs 1 to 5 randomly select sub-channels and transmit RTXs 1 to 5, where the time length includes any one or a combination of SIFS, PIFS, DIFS, or AIFS. The STAs 4 and 5 both select a sub-channel 4 on the channel 1 and access the sub-channel 4. Consequently, collision is generated.

An AP sends, according to a status of receiving the RTX sent by the surrounding STA, a CTX 1 to the STA, to schedule the STA to transmit data on a specified sub-channel. Using FIG. 13 as an example, the STA 0 may send the CTX 1 on all sub-channels on the channel 1 on which STAs 1 to 3 are to be scheduled, or may respectively send CTXs 1 to 3 only on sub-channels 1 to 3 on which the RTXs 1 to 3 are transmitted. In the two manners of sending the CTX, the STAs 0 to 3 may be scheduled to send respective DATA 0 to 3 on the sub-channels on which the RTXs 1 to 3 are transmitted, or specific sub-channels are allocated to the STAs 0 to 3 for sending respective DATA 0 to 3.

On a channel 2, STAs 6 to 9 transmit RTXs 6 to 9 on specified sub-channels, the RTXs 6 to 9 respectively access specified sub-channels 1 to 4, and collision does not occur. An AP sends, according to a status of receiving the RTX sent by the surrounding STA, a CTX 2 to the STA, to schedule the STA to transmit data on a specified sub-channel. Using FIG. 14 as an example, the STA 0 may send the CTX 2 on all sub-channels on the channel 2 on which the STAs 6 to 9 are to be scheduled, or may respectively send the CTXs 6 to 9 only on the sub-channels 1 to 4 on which the RTXs 6 to 9 are transmitted. In the two manners of sending the CTX, the STAs 6 to 9 may be scheduled to send respective DATA 6 to 9 on the sub-channels on which the RTXs 6 to 9 are transmitted, or specific sub-channels are allocated to the STAs 6 to 9 for sending respective DATA 0 to 3.

A frame structure of an RTX-01 sent by the STA 0 is shown in FIG. 14, and the RTX-01 includes the following fields: Frame Control (frame control), RA (Receiver Address, receiver address), TA (Transmission Address, transmitter address), BSS ID (Basic Service Set Identifier, basic service set identifier), Buffer Info. (Buffer Information, buffer information), and FCS (Frame Check Sequence, frame check sequence). A type of the Frame Control is: Type = 01, and Subtype = 0011. The BSS ID indicates an ID of a BSS of a STA initiating multiuser parallel access, and is used to determine, by a surrounding STA, whether the STA is in a same BSS as the initiating STA. The Buffer info. includes information such as a length and a type of data needing to be sent by a STA node.

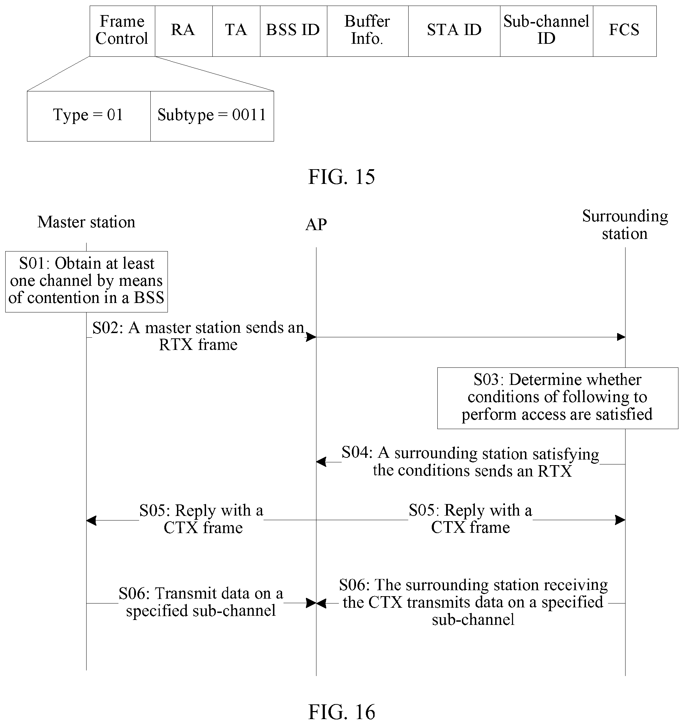

A frame structure of an RTX-02 sent by the STA 0 is shown in FIG. 15, and the RTX-02 includes the following fields: Frame Control (frame control), RA (Receiver Address, receiver address), TA (Transmission Address, transmitter address), BSS ID (Basic Service Set Identifier, basic service set identifier), Buffer Info. (Buffer Information, buffer information), STA ID (station identifier), Sub Channel ID (sub-channel identifier), and FCS (Frame Check Sequence, frame check sequence). A type of the Frame Control is: Type = 01, and Subtype = 0011. The BSS ID indicates an ID of a BSS of the STA 0, and is used to determine, by a surrounding STA, whether the surrounding STA is in a same BSS as the STA 0. The Buffer info. includes information such as a length and a type of data needing to be sent by the STA 0. A STA specified by the STA ID accesses a sub-channel. The Sub-channel ID specifies a number of the sub-channel that the STA accesses. The STAID is in one-to-one correspondence with the Sub-channel ID.

The STA 0 may specify, according to historical information, which STA accesses which sub-channel. The STA 0 may acquire information about the surrounding STA, such as an ID, a service, and an address, by listening to a MAC header transmitted by the surrounding STA. In summary, the STA 0 may acquire the information about the STA around the STA 0, so that the STA 0 can schedule the surrounding STA to access a specified sub-channel.

Example 5 describes only a case in which there are 10 STAs and two channels, and each channel includes four available sub-channels. In actual situations, there may be more STAs and available channels and sub-channels thereof. A specific implementation process is similar to the solution described in Example 5. The STA 0 may send the CTX by using multiple scheduling algorithms, which may be selected according to actual needs.

A solution, described in this embodiment of the present invention, of multiuser parallel access initiated by a STA has the following advantages: a requirement for RTX sending synchronization between STAs is satisfied; an interference range can be effectively controlled; "triggering without response" is avoided; an interference range of each data transmission is reduced; a conflict of uplink access is effectively controlled; a problem of "a proximity effect" is resolved; and an uplink synchronization problem is better resolved.

### Embodiment 6

With reference to Example 1 to Example 5, Embodiment 6 of the present invention provides a data transmission method. Specifically referring to FIG. 16, the method includes the following steps:
S01: A master station obtains at least one channel by means of contention in a BSS.
S02: The master station sends an RTX. If the master station obtains one channel by means of contention, the RTX is sent on the channel. For example, in Example 1 to Example 3, a STA 0 sends an RTX-0 frame on a channel obtained by means of contention (see FIG. 2, FIG. 6, and FIG. 8). If the master station obtains multiple channels by means of contention, RTXs are sent on the multiple channels obtained by means of contention. For example, in Example 5, the STA 0 respectively sends an RTX-01 and an RTX-02 on two channels obtained by means of contention. The RTX sent by the master station can be received by an AP in a same BSS and a station around the master station or obtained by means of listening by an AP in a same BSS and a station around the master station. The RTX sent by the master station includes at least buffer data information (Buffer Info.) and information (BSS ID) about the BSS to which the master station belongs. The BSS information is used to identify, by another receiving node, whether the receiving node is in the same BSS as the master station. The Buffer data information (Buffer Info.) includes information such as a length and a type of data needing to be sent by the master station. The RTX sent by the master station may further include information such as a station number (STA ID) and a sub-channel number (Sub-Channel ID). The station number (STA ID) is used to specify a corresponding station to access a sub-channel, and the sub-channel number specifies a sub-channel that the corresponding station accesses. The station number is in one-to-one correspondence with the sub-channel number.
S03: The surrounding station obtaining, by means of listening, the RTX sent by the master station determines whether the surrounding station satisfies conditions of following the master station to perform access, where the specific following conditions are: the surrounding station obtaining, by means of listening, the RTX sent by the master station has buffer data to be transmitted; the surrounding station is in the same BSS as the master station; and a power of a signal received from the master station is greater than a preset threshold.
S04: The surrounding station satisfying the following conditions sends an RTX. Specifically, the surrounding station satisfying the following conditions may randomly contend for access to a sub-channel and sends the RTX on the sub-channel obtained by means of contention. The surrounding station satisfying the following conditions may send the RTX on a specified channel according to indication information (for example, information, such as a station number (STA ID) and a sub-channel number (Sub-Channel ID), included in the RTX sent by the master station) included in the RTX sent by the master station.
S05: After receiving RTX information sent by stations (including the master station and the surrounding station that sends the RTX), the AP replies to the stations with CTXs to instruct an access station to transmit data on a specified sub-channel. The CTX includes information such as a station number (STA ID) and a sub-channel number (Sub-Channel ID). The station number (STAID) is used to specify a corresponding station to access a sub-channel, and the sub-channel number specifies a sub-channel that the corresponding station accesses. The station number is in one-to-one correspondence with the sub-channel number. A sub-channel on which the surrounding station satisfying the following conditions sends the RTX and a sub-channel on which the surrounding station sends data may be the same or may be different. For example, a STA 1 contending for access to a sub-channel 1 sends an RTX on the sub-channel 1, and after receiving the RTX of the STA 1, the AP may allocate, according to a sub-channel occupation status, the sub-channel 1 to the STA 1 for transmitting data or may allocate another sub-channel to the STA 1 for transmitting data.
   If the surrounding station satisfying the following conditions accesses a sub-channel in a manner of random contention, collision may be generated. RTXs sent by stations colliding with each other cannot be normally decoded by the access point AP. Therefore, the AP does not allocate a sub-channel to the station colliding with each other, for sending data, and the AP may allocate a sub-channel, on which collision occurs, to another station for sending data. For example, a STA 4 and a STA 5 in FIG. 2 collide on a sub-channel 4. Subsequently, the AP allocates the sub-channel 4 to the master station STA 0 for sending data DATA-0, and does not allocate sub-channels to the STA 4 and the STA 5 colliding with each other, for sending data.
S06: The master station and the surrounding station satisfying the following conditions can transmit data on sub-channels specified by the access point.

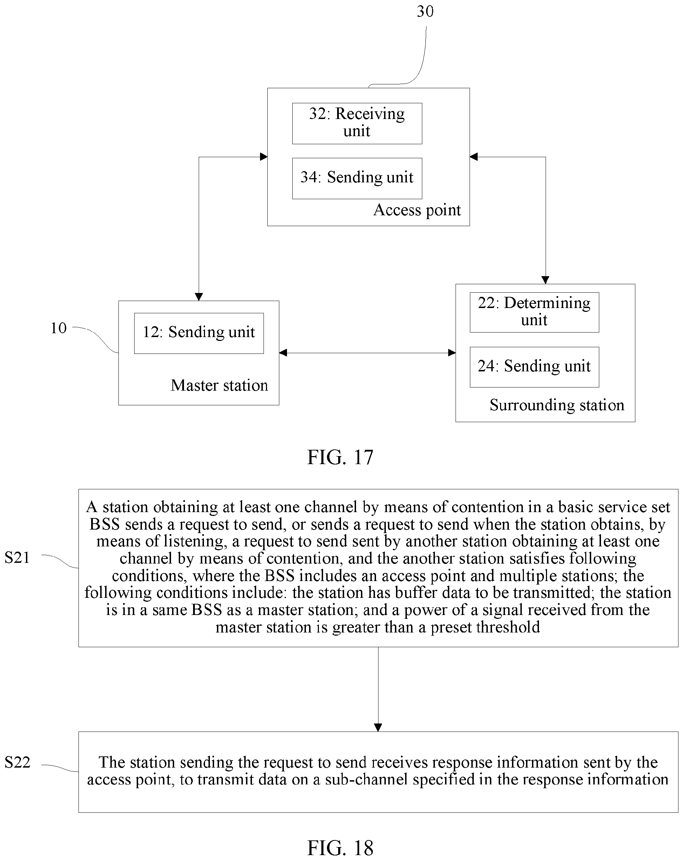

With reference to Example 1 to Example 5, Embodiment 6 of the present invention further provides a communications system. Specifically referring to FIG. 17, the communications system includes:
a master station 10, where the master station 10 obtains at least one channel by means of contention in a basic service set BSS and includes a sending unit 12 configured to send a request to send;
one or more surrounding stations 20 capable of obtaining, by means of listening, the request to send sent by the master station 10, where each surrounding station 20 includes a determining unit 22, configured to determine whether the surrounding station satisfies following conditions of following the master station to send a request to send, and the following conditions include: the surrounding station has buffer data to be transmitted; the surrounding station is in the same BSS as the master station; and a power of a signal received from the master station is greater than a preset threshold; and each surrounding station 20 further includes a sending unit 24, configured to send a request to send when the surrounding station satisfies the following conditions; and
an access point 30 in the same BSS as the master station 10, where the access point 30 includes a receiving unit 32 and a sending unit 34, the receiving unit 32 is configured to receive the requests to send sent by the master station and the follower station of the master station, and the sending unit 34 is configured to send response information, to schedule the master station and the follower station of the master station to transmit data on specified sub-channels. The follower station is a station satisfying the foregoing following conditions.

Specifically, the request to send sent by the master station includes buffer data information and information about the BSS to which the master station belongs, the BSS information is used to identify, by the surrounding station, whether the surrounding station is in the same BSS as the master station, and the buffer data information includes a length and a type of data needing to be sent by the master station.

Specifically, the follower station can send a request to send on a sub-channel specified by the master station; the request to send sent by the master station further includes a station number and a sub-channel number; and the station number is used to specify a corresponding follower station to access a sub-channel, the sub-channel number is used to specify a sub-channel that the corresponding follower station accesses, and the station number is in one-to-one correspondence with the sub-channel number.

Specifically, the request to send sent by the master station or the surrounding station is sent in a manner of OFDMA or MU-MIMO.

Specifically, the request to send sent by the master station or the surrounding station further includes access manner indication information, and the access manner indication information is used to instruct the station to perform access in a manner of OFDMA or UL MU-MIMO.

Specifically, the master station and the follower station of the master station can transmit data on sub-channels specified by the access point; the response information includes a station number and a sub-channel number; and the station number is used to specify a corresponding follower station to access a sub-channel, the sub-channel number is used to specify a sub-channel that the corresponding follower station accesses, and the station number is in one-to-one correspondence with the sub-channel number.

### Example 7

Based on Example 1 to Example 5, Example 7 of the present invention further provides a data transmission method. Specifically referring to FIG. 18, the method includes the following steps: S21: A station sends a request to send when the station obtains, by means of listening, a request to send sent by another station obtaining at least one channel by means of contention, and the another station satisfies following conditions, where the BSS includes an access point and multiple stations; the following conditions include: the station has buffer data to be transmitted; the station is in a same BSS as a master station; and a power of a signal received from the master station is greater than a preset threshold.

S22: The station sending the request to send receives response information sent by the access point, to transmit data on a sub-channel specified in the response information.

Specifically, the request to send sent by the station includes buffer data information and information about the BSS to which the station belongs, the BSS information is used to identify, by another receiving node, whether the receiving node is in the same BSS as the station, and the buffer data information includes a length and a type of data needing to be sent by the station.

Specifically, the request to send sent by the station obtaining at least one channel by means of contention includes a station number and a sub-channel number; the station number is used to specify a corresponding follower station to access a sub-channel, the sub-channel number specifies a sub-channel that the corresponding follower station accesses, and the station number is in one-to-one correspondence with the sub-channel number; and the follower station is a station satisfying the following conditions.

Specifically, the request to send is sent in a manner of OFDMA or MU-MIMO.

Specifically, the request to send sent by the station further includes access manner indication information, and the access manner indication information is used to instruct the station to perform access in a manner of OFDMA or UL MU-MIMO.

Specifically, the request to send uses an RTX frame structure, and the data transmission method further includes: determining whether a frame length of a request to send to be sent by the station is the same as a preset frame length; and enabling, in a manner of bit stuffing, the frame length of the request to send to reach the preset frame length when the frame length of the request to send to be sent is less than the preset frame length.

Specifically, the method further includes: selecting a modulation and coding scheme MCS according to the preset frame length.

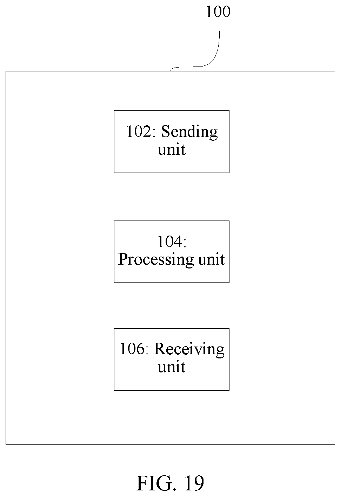

Example 7 of the present invention further provides a station 100. Specifically referring to FIG. 19, the station 100 includes:
a sending unit 102, configured to send a request to send when the station obtains, by means of listening, a request to send sent by another station obtaining at least one channel by means of contention, and the another station satisfies following conditions, where the following conditions include: the station has buffer data to be transmitted; the station is in a same BSS as the station obtaining at least one channel by means of contention; and a power of a signal received from the station obtaining at least one channel by means of contention is greater than a preset threshold; and
a receiving unit 106, configured to receive response information sent by an AP, where the response information can be used to schedule the station to transmit data on a specified sub-channel.

Specifically, the request to send sent by the station includes buffer data information and information about the BSS to which the station belongs, the BSS information is used to identify, by another receiving node, whether the receiving node is in the same BSS as the station, and the buffer data information includes a length and a type of data needing to be sent by the station.

Specifically, the request to send sent by the station obtaining at least one channel by means of contention includes a station number and a sub-channel number; the station number is used to specify a corresponding follower station to access a sub-channel, the sub-channel number specifies a sub-channel that the corresponding follower station accesses, and the station number is in one-to-one correspondence with the sub-channel number; and the follower station is a station satisfying the following conditions.

Specifically, the request to send is sent in a manner of OFDMA or MU-MIMO.

Specifically, the request to send sent by the station further includes access manner indication information, and the access manner indication information is used to instruct the station to perform access in a manner of OFDMA or UL MU-MIMO.

Specifically, the station further includes a processing unit 104, the request to send uses an RTX frame structure, the processing unit 104 is configured to determine whether a frame length of a request to send to be sent by the station is the same as a preset frame length, and if the frame length of the request to send to be sent by the station is less than the preset frame length, the processing unit is further configured to enable, in a manner of bit stuffing, the frame length of the request to send to reach the preset frame length. The processing unit 104 may be further configured to select a modulation and coding scheme MCS according to the preset frame length.

**Examle 8** described below is not according to the invention and is present for illustration purposes only.

### Example 8

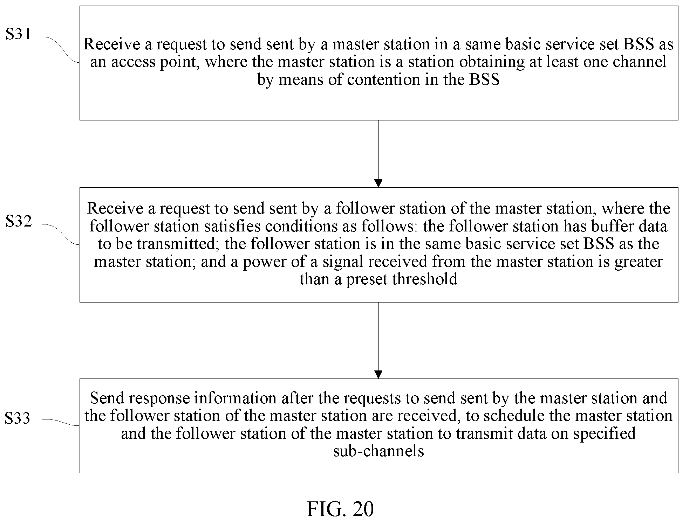

Based on Example 1 to Example 5, Example 8 of the present invention further provides a data transmission method. Specifically referring to FIG. 20, the method includes the following steps:
S31: Receive a request to send sent by a master station in a same basic service set BSS as an access point, where the master station is a station obtaining at least one channel by means of contention in the BSS.
S32: Receive a request to send sent by a follower station of the master station, where the follower station satisfies conditions as follows: the follower station has buffer data to be transmitted; the follower station is in the same basic service set BSS as the master station; and a power of a signal received from the master station is greater than a preset threshold.
S33: Send response information after the requests to send sent by the master station and the follower station of the master station are received, to schedule the master station and the follower station of the master station to transmit data on specified sub-channels.

Specifically, the response information uses a CTX frame structure, the response message includes a station number and a sub-channel number, the station number is used to specify a station to access a sub-channel, the sub-channel number is used to specify a sub-channel that the corresponding station accesses, and the station number is in one-to-one correspondence with the sub-channel number.

Specifically, the method further includes: receiving data that is sent by the master station and the follower station of the master station on the specified sub-channels; and sending acknowledgement messages to the master station and the follower station of the master station after the data sent by the master station and the follower station of the master station is received. Specifically, the method further includes: if another station around the master station has no service for sending, after waiting for a preset time, sending, by the access point, indication information to the master station, so that the master station occupies the channel obtained by means of contention.

Specifically, a manner of sending, by the access point, the response information to the master station and a slave station is: sending, by the access point, the response information on a whole channel on which the master station and the follower station are to be scheduled; or separately sending, by the access point, the response information CTX to the master station and the follower station of the master station on sub-channels on which the request to send of the follower station is transmitted.

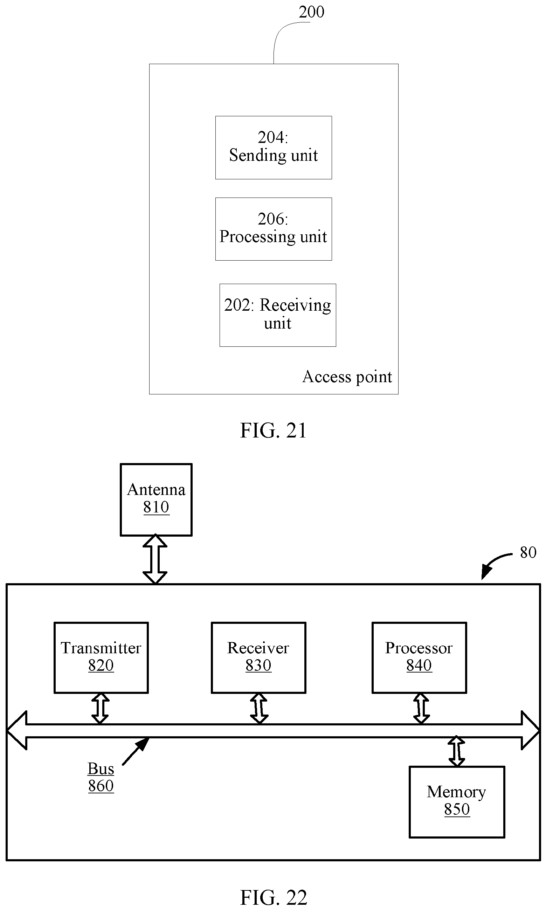

Example 8 of the present invention further provides an access point 200. Specifically referring to FIG. 21, the access point 200 includes:
a receiving unit 202, configured to receive a request to send sent by a master station in a same basic service set BSS as the access point, where the master station is a station obtaining at least one channel by means of contention in the basic service set; further configured to receive a request to send sent by a follower station of the master station, where the follower station satisfies conditions as follows: the follower station has buffer data to be transmitted; the follower station is in the same basic service set BSS as the master station; and a power of a signal received from the master station is greater than a preset threshold;
a sending unit 204, configured to send response information after the requests to send sent by the master station and the follower station of the master station are received, to schedule the master station and the follower station of the master station to transmit data on specified sub-channels; and
a processing unit 206, where the requests to send sent by the master station and the follower station include buffer data information, the processing unit 206 allocates sub-channels to the master station and the follower station according to the buffer data information of the master station and the follower station, for example, allocates sub-channels to the master station and the follower station according to sizes of buffer data volumes of the master station and the follower station, where one or more sub-channels may be allocated to a station having a greater volume of buffer data to be transmitted, to satisfy a data transmission requirement; or the processing unit 206 may allocates sub-channels to the follower station and the master station according to a number of a sub-channel on which the follower station sends the request to send. As shown in FIG. 2, follower stations STAs 1 to 3 respectively transmit requests to send RTXs 1 to 3 on sub-channels 1 to 3. Therefore, the processing unit 206 also specifies the follower stations STAs 1 to 3 to respectively transmit data on the sub-channels 1 to 3 and specifies the master station STA 0 to transmit data on another sub-channel (such as a sub-channel 4) that is not occupied.

Specifically, the response information uses a CTX frame structure, the response message includes a station number and a sub-channel number, the station number is used to specify a station to access a sub-channel, the sub-channel number is used to specify a sub-channel that the corresponding station accesses, and the station number is in one-to-one correspondence with the sub-channel number.

Specifically, the receiving unit 202 is further configured to receive data that is sent by the master station and the follower station of the master station on the specified sub-channels; and the sending unit 204 is further configured to send acknowledgement messages to the master station and the follower station of the master station after the data sent by the master station and the follower station of the master station is received.

In the embodiment shown in FIG. 22, a station 80 includes an antenna 810, a transmitter 820, a receiver 830, a processor 840, and a memory 850. The processor 840 controls an operation of the station 80 and may be configured to process a signal. The memory 850 may include a read-only memory and a random access memory and provides instructions and data to the processor 840. The transmitter 820 and the receiver 830 may be coupled to the antenna 810. Components of the station 80 are coupled together by using a bus system 860. Besides a data bus, the bus system 860 further includes a power bus, a control bus, and a status signal bus.

Specifically, the processor 840 may control the station 80 to execute the following operations:
if the station 80 obtains at least one channel by means of contention in a basic service set BSS. or the station 80 obtains, by means of listening, a request to send sent by another station obtaining at least one channel by means of contention and the another station satisfies following conditions, sending, by the station 80, a request to send, where the following conditions include: the station has buffer data to be transmitted; the station is in the same BSS as the master station; and a power of a signal received from the master station is greater than a preset threshold; and
receiving, by the station sending the request to send, response information sent by an access point, to transmit data on a sub-channel specified in the response information.

Specifically, the request to send sent by the station includes buffer data information and information about the BSS to which the station belongs, the BSS information is used to identify, by another receiving node, whether the receiving node is in the same BSS as the station, and the buffer data information includes a length and a type of data needing to be sent by the station. Specifically, the request to send sent by the station obtaining at least one channel by means of contention includes a station number and a sub-channel number; the station number is used to specify a corresponding follower station to access a sub-channel, the sub-channel number specifies a sub-channel that the corresponding follower station accesses, and the station number is in one-to-one correspondence with the sub-channel number; and the follower station is a station satisfying the following conditions.

Specifically, the request to send is sent in a manner of OFDMA or MU-MIMO.

Specifically, the request to send sent by the station further includes access manner indication information, and the access manner indication information is used to instruct the station to perform access in a manner of OFDMA or UL MU-MIMO.

Specifically, the request to send uses an RTX frame structure, and the data transmission method further includes: determining whether a frame length of a request to send to be sent by the station is the same as a preset frame length; and enabling, in a manner of bit stuffing, the frame length of the request to send to reach the preset frame length when the frame length of the request to send to be sent is less than the preset frame length.

Specifically, the method further includes: selecting a modulation and coding scheme MCS according to the preset frame length.

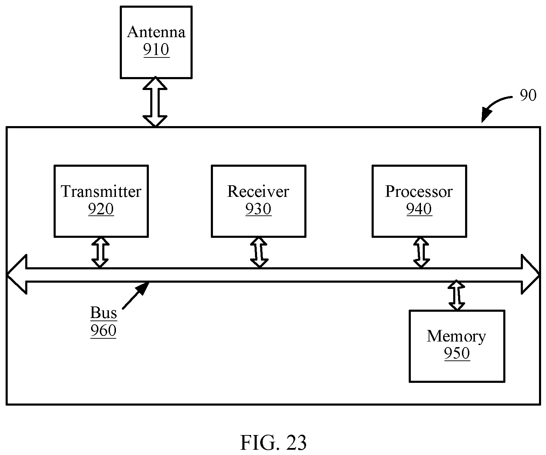

In the example shown in FIG. 23, an access point 90 includes an antenna 910, a transmitter 920, a receiver 930, a processor 940, and a memory 950. The processor 940 controls an operation of the access point 90 and may be configured to process a signal. The memory 950 may include a read-only memory and a random access memory and provides instructions and data to the processor 940. The transmitter 920 and the receiver 930 may be coupled to the antenna 910. Components of the station 90 are coupled together by using a bus system 960. Besides a data bus, the bus system 960 further includes a power bus, a control bus, and a status signal bus. Specifically, the processor 940 may control the access point 90 to execute the following operations:
receiving a request to send sent by a master station in a same basic service set BSS as the access point 940, where the master station is a station obtaining at least one channel by means of contention in the BSS;
receiving a request to send sent by a follower station of the master station, where the follower station satisfies conditions as follows: the follower station has buffer data to be transmitted; the follower station is in the same basic service set BSS as the master station; and a power of a signal received from the master station is greater than a preset threshold; and
sending response information after the requests to send sent by the master station and the follower station of the master station are received, to schedule the master station and the follower station of the master station to transmit data on specified sub-channels.

The access point receives data that is sent by the master station and the follower station of the master station on the specified sub-channels, and sends acknowledgement messages to the master station and the follower station of the master station after the data sent by the master station and the follower station of the master station is received.

If another station around the master station has no service for sending, after waiting for a preset time, the access point sends indication information to the master station, so that the master station occupies the channel obtained by means of contention.

A manner of sending, by the access point, the response information to the master station and a slave station is: sending, by the access point, the response information on a whole channel on which the master station and the follower station are to be scheduled; or separately sending, by the access point, the response information CTX to the master station and the follower station of the master station on sub-channels on which the request to send of the follower station is transmitted.

Specifically, the response information uses a CTX frame structure, the response message includes a station number and a sub-channel number, the station number is used to specify a station to access a sub-channel, the sub-channel number is used to specify a sub-channel that the corresponding station accesses, and the station number is in one-to-one correspondence with the sub-channel number.

It should be understood that sequence numbers of the foregoing processes do not mean execution sequences in various embodiments of the present invention. The execution sequences of the processes should be determined according to functions and internal logic of the processes, and should not be construed as any limitation on the implementation processes of the embodiments of the present invention.

A person of ordinary skill in the art may be aware that, in combination with the examples described in the embodiments disclosed in this specification, units and algorithm steps may be implemented by electronic hardware, computer software, or a combination thereof. To clearly describe the interchangeability between the hardware and the software, the foregoing has generally described compositions and steps of each example according to functions. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein.

In the several embodiments provided in the present application, it should be understood that the disclosed apparatus and method may be implemented in other manners. For example, the described apparatus embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication access may be implemented through some interfaces. The indirect couplings or communication access between the apparatuses or units may be implemented in electronic, mechanical, or other forms.

The units described as separate parts may or may not be physically separate, and parts displayed as units may or may not be physical units, may be located in one position, or may be distributed on a plurality of network units. A part or all of the units may be selected according to actual needs to achieve the objectives of the solutions of the embodiments of the present invention.

In addition, functional units in the embodiments of the present invention may be integrated into one processing unit, or each of the units may exist alone physically, or two or more units are integrated into one unit. The integrated unit may be implemented in a form of hardware, or may be implemented in a form of a software functional unit. Specifically, the integrated unit may be implemented by using software plus necessary universal hardware. The universal hardware includes a universal integrated circuit, a universal CPU, a universal memory, a universal component, and the like. Certainly, the integrated unit may be implemented by using dedicated hardware including a dedicated integrated circuit, a dedicated CPU, a dedicated memory, a dedicated component, and the like. Specifically, the stations (including a station STA 0 that is the first to obtain a channel by means of contention and a follower station of the station) and the access points in the foregoing embodiments may implement the signaling process and relevant functions shown in FIG. 2 to FIG. 16 by using a dedicated hardware thereof including a dedicated integrated circuit, a dedicated CPU, a dedicated memory, a dedicated component, and the like.

When the integrated unit is implemented in the form of a software functional unit and sold or used as an independent product, the integrated unit may be stored in a computer-readable storage medium. Based on such an understanding, the technical solutions of the present invention essentially, or the part contributing to the prior art, or all or a part of the technical solutions may be implemented in the form of a software product. The software product is stored in a storage medium and includes several instructions for instructing a computer device (which may be a personal computer, a server, or a network device) to perform all or a part of the steps of the methods described in the embodiments of the present invention. The foregoing storage medium includes: any medium that can store program code, such as a USB flash drive, a removable hard disk, a read-only memory (ROM for short), a random access memory (RAM for short), a magnetic disk, or an optical disc.

## Claims

1. A station, wherein the station is in a basic service set, BSS, comprising an access point, AP, and multiple stations and the station comprises:
a sending unit configured:
when the station obtains, by means of listening, a second request to send sent by another station acting as a master station, and the station satisfies the following conditions: the station has buffer data to be transmitted; the station is in a same basic service set, BSS, as the other station sending the second request to send, and a power of a signal received from the other station sending the second request to send and obtaining at least one channel by means of contention is greater than a preset threshold, to send a third request to send to the AP, and
a receiving unit, configured to receive response information sent by the AP, wherein the response information is used to schedule the station to transmit data on a specified sub-channel;
wherein a master station is a station which after obtaining at least one channel by means of contention sends the second request to send and wherein the second request to send comprises buffer data information and information about a BSS to which the master station sending the second request to send belongs, wherein the BSS information is used to identify, by the station, whether the station is in the same BSS as the master station sending the second request to send, and wherein the buffer data information of the second request to send comprises a length and a type of data needing to be sent by the master station sending the second request to send and wherein the buffer data information of the third request to send comprises a length and a type of data needing to be sent by the station sending the third request to send.

2. The station according to claim 1, wherein the station is configured, when the station obtains, by means of listening, the second request to send sent by the another station obtaining at least one channel by means of contention and the station satisfies the following conditions, to randomly select a sub-channel to transmit the third request to send.

## Patentansprüche

1. Station, wobei sich die Station in einer Grunddienstmenge, BSS (Basic Service Set), befindet, die einen Zugangspunkt, AP (Access Point), und mehrere Stationen umfasst, und die Station Folgendes umfasst:
eine Sendeeinheit, die zu Folgendem ausgelegt ist:
wenn die Station mittels Horchen eine durch eine als Master-Station fungierende andere Station gesendete zweite Anforderung zum Senden erhält und die Station die folgenden Bedingungen erfüllt: die Station weist zu übertragende Pufferdaten auf; die Station befindet sich in derselben Grunddienstmenge, BSS, wie die andere Station, die die zweite Anforderung zum Senden sendet, und eine Leistung eines von der anderen Station, die die zweite Anforderung zum Senden sendet und mindestens einen Kanal mittels Wettbewerb erhält, empfangenen Signals größer als eine vorgegebene Schwelle ist, Senden einer dritten Anforderung zum Senden an den AP, und
eine Empfangseinheit, ausgelegt zum Empfangen von durch den AP gesendeten Antwortinformationen, wobei die Antwortinformationen verwendet werden zum Planen der Station zum Übertragen von Daten auf einem spezifizierten Unterkanal,
wobei eine Master-Station eine Station ist, die nach Erhalten mindestens eines Kanal mittels Wettbewerb die zweite Anforderung zum Senden sendet, und wobei die zweite Anforderung zum Senden Pufferdateninformationen und Informationen über eine BSS, zu der die Master-Station, die die zweite Anforderung zum Senden sendet, gehört, umfasst, wobei die BSS-Informationen verwendet werden zum Identifizieren, durch die Station, ob sich die Station in derselben BSS wie die Master-Station, die die zweite Anforderung zum Senden sendet, befindet, und wobei die Pufferdateninformationen der zweiten Anforderung zum Senden eine Länge und einen Typ von Daten, die durch die Master-Station, die die zweite Anforderung zum Senden sendet, gesendet werden müssen, umfassen und wobei die Pufferdateninformationen der dritten Anforderung zum Senden eine Länge und einen Typ von Daten, die durch die Station, die die dritte Anforderung zum Senden sendet, gesendet werden müssen, umfassen.

2. Station nach Anspruch 1, wobei die Station ausgelegt ist, wenn die Station mittels Horchen die durch die andere Station, die mindestens einen Kanal mittels Wettbewerb erhält, gesendete zweite Anforderung zum Senden erhält und die Station die folgenden Bedingungen erfüllt, zum zufälligen Auswählen eines Unterkanals zum Übertragen der dritten Anforderung zum Senden.

## Revendications

1. Station, la station étant dans un ensemble de services de base (BSS) comprenant un point d'accès (AP) et de multiples stations et la station comprenant :
une unité d'envoi configurée pour :
quand la station obtient, au moyen d'une écoute, une deuxième demande à envoyer qui est envoyée par une autre station qui agit comme une station maîtresse et quand la station satisfait aux conditions suivantes : la station a des données en mémoire tampon à transmettre ; la station est dans un même ensemble de services de base (BSS) que l'autre station qui envoie la deuxième demande à envoyer ; et une puissance d'un signal, reçu de l'autre station qui envoie la deuxième demande à envoyer et qui obtient au moins un canal au moyen d'une contention, est supérieure à un seuil prédéfini, envoyer une troisième demande à envoyer à l'AP ; et
une unité de réception, configurée pour recevoir une information de réponse envoyée par l'AP, l'information de réponse étant utilisée pour planifier la station pour transmettre des données sur un sous-canal spécifié ;
une station maîtresse étant une station qui, après l'obtention d'au moins un canal au moyen d'une contention, envoie la deuxième demande à envoyer et la deuxième demande à envoyer comprenant une information de données en mémoire tampon et une information concernant un BSS auquel appartient la station maîtresse qui envoie la deuxième demande à envoyer, l'information de BSS étant utilisée pour identifier, par la station, si la station est dans le même BSS que la station maîtresse qui envoie la deuxième demande à envoyer et l'information de données en mémoire tampon de la deuxième demande à envoyer comprenant une longueur et un type de données qui doivent être envoyées par la station maîtresse qui envoie la deuxième demande à envoyer, et l'information de données en mémoire tampon de la troisième demande à envoyer comprenant une longueur et un type de données qui doivent être envoyées par la station qui envoie la troisième demande à envoyer.

2. Station selon la revendication 1, la station étant configurée, quand la station obtient, au moyen d'une écoute, la deuxième demande à envoyer qui est envoyée par l'autre station qui obtient au moins un canal au moyen d'une contention et quand la station satisfait aux conditions suivantes, pour sélectionner aléatoirement un sous-canal pour transmettre la troisième demande à envoyer.
